(19) Europäisches Patentamt
European Patent Office
Office européen des brevets

(11) Veröffentlichungsnummer: **0 003 483**
**A2**

# (12) EUROPÄISCHE PATENTANMELDUNG

(21) Anmeldenummer: **78101847.8**

(22) Anmeldetag: **23.12.78**

(51) Int. Cl.²: **C 08 G 59/56**, C 08 G 59/16, C 09 D 3/58

(30) Priorität: **05.01.78 DE 2800356**

(43) Veröffentlichungstag der Anmeldung: **22.08.79 Patentblatt 79/17**

(84) Benannte Vertragsstaaten: **BE CH DE FR GB IT NL SE**

(71) Anmelder: **Bayer Aktiengesellschaft, Zentralbereich Patente,Marken und Lizenzen Bayerwerk, D-5090 Leverkusen 1 (DE)**

(72) Erfinder: **Schuster, Karl-Ernst, Dr., Heideweg 2, D-4173 Kerken 3 (DE)**
Erfinder: **Rosenkranz, Hans Jürgen, Dr., Heinrich-Kauert-Weg 9, D-4150 Krefeld (DE)**
Erfinder: **Buysch, Hans-Josef, Dr., Brandenburgerstrasse 28, D-4150 Krefeld (DE)**
Erfinder: **Fuhr, Karl, Dr., Krüllsdyk 55, D-4150 Krefeld (DE)**
Erfinder: **Rudolph, Hans, Dr., Haydnstrasse 9, D-4150 Krefeld (DE)**

## (54) Photopolymerisierbare Bindemittel mit eingebautem Photoinitiator und eingebautem Beschleuniger und deren Verwendung in UV-härtenden Überzugmassen.

(57) Photopolymerisierbare Bindemittel mit eingebautem Photoinitiator und eingebautem Beschleuniger aus einem Umsetzungsprodukt aus einem 1,2-Polyepoxid mit mehr als einer 1,2-Epoxidgruppe pro Molekül

a) mit 0,01 bis 0,3 NH-Äquivalenten, bezogen auf 1 Epoxidäquivalent, Ammoniak oder eines aliphatischen oder cycloaliphatischen primären oder sekundären Amins oder eines Gemisches der vorgenannten Stickstoffverbindungen und anschließend

b) mit 0,01 bis 0,6 Carboxyäquivalenten, bezogen auf ein Epoxidäquivalent mindestens einer ortho-, meta- oder para-Benzoylbenzoesäure der Formel

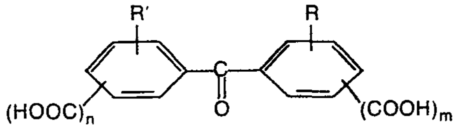

worin R und R' gleich oder verschieden sein können und Wasserstoff, Halogen oder Di-$C_1$–$C_4$-alkylaminogruppen, $C_1$–$C_6$-Alkyl, Cycloalkyl mit 5–6 C-Atomen und m oder n die Zahl 1 mit der Bedingung $n + m = 1$ bedeuten, und daran anschließend

c) mit 0,98 bis 0,4 Carboxyläquivalenten, bezogen auf 1 Epoxidäquivalent, Acryl- oder Methacrylsäure oder eines Gemisches aus Acryl- und Methacrylsäure, mindestens 80% der 1,2-Epoxidgruppen sind durch die drei Schritte a, b und c umgesetzt worden.

EP 0 003 483 A2

BEZEICHNUNG GEÄNDERT
siehe Titelseite

BAYER AKTIENGESELLSCHAFT
Zentralbereich
Patente, Marken und Lizenzen

5090 Leverkusen, Bayerwerk
Fr/Mo

Photopolymerisierbare Bindemittel mit eingebautem Photoinitiator und eingebautem Beschleuniger

Die Erfindung betrifft neue, hochreaktive, photopolymerisierbare Bindemittel auf Basis Stickstoff-modifizierter Epoxy-Acrylate, die einen eingebauten Photoinitiator und einen eingebauten Beschleuniger enthalten, und die nach dem Aushärten mit UV-Licht über praktisch keine extrahierbaren bzw. diffusionsfähigen Bestandteile verfügen.

UV-Licht-härtende Bindemittel auf Basis von Polyacrylsäureestern werden im allgemeinen mit speziellen Initiatoren, wie z.B. Benzoinäthern, Benzophenon/tert.-Amin, Benzilketal etc. in Mengen bis zu 20 %, vorzugsweise 1 bis 5 %, bezogen auf härtbares Bindemittel, versehen, um eine radikalische Photopolymerisation zu gewährleisten. Solche Bindemittel und die darin verwendeten Photoinitiatoren gehören zum Stand der Technik und wurden schon häufig beschrieben, z.B. in den deutschen Offenlegungsschriften DE-OS 2 429 527, 2 244 171 oder 2 349 979.

Leider ist es jedoch so, daß der größte Teil (ca. 90 %) des eingesetzten Photoinitiators bei der Härtung durch UV-Licht

nicht zur Reaktion gelangt und das dem vernetzten Film unverändert extrahiert werden kann, wie Untersuchungen von J.I. Greary (Journal of Coatings Technologie (49) 626, S. 25 (1977))zeigen.

Solche Bindemittel mit extrahierbaren bzw. diffusionsfähigen Verbindungen können jedoch z.B. im Lebensmittelverpackungs-Sektor aus naheliegenden Gründen keine Anwendung finden.

Es wäre jedoch wünschenswert, gerade für diesen Anwendungsbereich ein Bindemittel zu haben, daß die Vorteile der Photopolymerisation mit den Anforderungen an die Lebensmittelhygiene vereint.

Es hat nicht an Versuchen gefehlt, einpolymerisierbare Initiatoren zu entwicklen. In der Literatur werden z.B. Acrylsäurebenzoinester beschrieben (Barzynsky, Chem. Zeitung 96 (1972), S. 545) oder Umsetzungsprodukte aus Benzophenoncarbonsäurederivaten mit Hydroxyäthyl(meth)acrylat (vergl. US-PS 4 004 998 und deutsche Offenlegungsschrift No. 2 643 701).

Diese Verbindungen erweisen sich jedoch als nicht praxisgerecht, da sie einerseits nicht genügend reaktiv sind und andererseits über keine ausreichende Dunkellagerstabilität verfügen.

Aus der deutschen Offenlegungsschrift 2 534 012 sind ferner Überzugsmittel mit einem Gehalt an Umsetzungsprodukten eines Polyepoxids mit mehr als einer Epoxidgruppe pro Molekül bekannt, dadurch gekennzeichnet, daß dessen Epoxidgruppen

a) mit 0,01 - 0,5 NH-Äquivalenten, bezogen auf 1 Epoxidäquivalent, Ammoniak oder eines aliphatischen oder

cycloaliphatischen primären oder sekundären Amins oder einer Aminocarbonsäure oder eines Gemisches der vorgenannten Stickstoffverbindungen und anschließend

b) mit 0,40 - 0,90 Carboxyläquivalenten, bezogen auf 1 Epoxidäquivalent der Acryl- oder Methacrylsäure oder eines Gemisches aus Acryl- und Methacrylsäure sowie daran anschließend

c) mit 0,09 - 0,50 Carboxyläquivalenten, bezogen auf 1 Epoxidgruppe einer gesättigten aliphatischen, einer cycloaliphatischen oder einer aromatischen Carbonsäure umgesetzt wurden,

so daß mindestens 80 % der ursprünglich vorhandenen Epoxidgruppen durch diese 3 Teilschritte umgesetzt worden sind. Derartige Überzugsmittel enthalten jedoch keine eingebauten Photoinitiatoren.

Aufgabe der vorliegenden Erfindung war es nun, ein hochreaktives, dunkellagerstabiles, lösungsmittelfreies photopolymerisierbares Harz zu entwickeln, das nach der Photopolymerisation praktisch keine diffusionsfähige bzw. extrahierbare Verbindungen mehr enthält.

Die Aufgabe konnte dadurch gelöst werden, daß mit primären und/oder sekundären Aminen bzw. Ammoniak modifizierte Polyepoxide mit Benzophenoncarbonsäuren und Acrylsäuren zu einem photopolymerisierbaren Harz umgesetzt werden.

Gegenstand der vorliegenden Erfindung sind deshalb photopolymerisierbare Bindemittel auf Basis von Umsetzungsprodukten aus Stickstoff-modifizierten Polyepoxiden mit mehr als einer 1,2-Epoxidgruppe pro Molekül und α,β-monoolefinisch unge-

sättigten Carbonsäuren sowie aromatischen Carbonsäuren, wobei mindestens 80 % der Epoxidgruppen des Polyepoxids umgesetzt worden sind, dadurch gekennzeichnet, daß das 1.2-Polyepoxid

a) mit 0.01 bis 0.3 NH-Äquivalenten, bezogen auf 1 Epoxidäquivalent, Ammoniak oder eines aliphatischen oder cycloaliphatischen primären oder sekundären Amins oder eines Gemisches der vorgenannten Stickstoffverbindungen und anschließend

b) mit 0.01 bis 0,6 Carboxyläquivalenten, bezogen auf ein Epoxidäquivalent mindestens einer ortho-, meta- oder para-Benzoylbenzoesäure der Formel

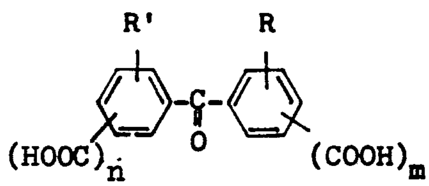

worin R und R' gleich oder verschieden sein können und Wasserstoff, Halogen, Di- $C_1$-$C_4$-alkylaminogruppen, $C_1$-$C_6$-Alkyl, Cycloalkyl mit 5 - 6 C-Atomen und m oder n die Zahl 1 mit der Bedingung $n + m = 1$ bedeuten und daran anschließend

c) mit 0.98 bis 0.4 Carboxyläquivalenten, bezogen auf 1 Epoxidäquivalent, Acryl- oder Methacrylsäure oder eines Gemisches aus Acryl- und Methacrylsäure umgesetzt worden ist.

Gegenstand der Erfindung ist auch ein Verfahren zur Herstellung der photopolymerisierbaren Bindemittel.

Unter Polyepoxiden werden in der vorliegenden Anmeldung Verbindungen verstanden, die mehr als eine 1,2-Epoxidgruppe pro Molekül, vorzugsweise 1,6 bis 6, insbesondere 1,6 bis

3 Epoxidgruppen enthalten. Weiter bedeutet ein Epoxidäquivalent die Menge eines Epoxids in Gramm, die eine Epoxidgruppe enthält.

Die zu verwendenden Polyepoxidverbindungen können Polyglycidyläther mehrwertiger Phenole sein, beispielsweise aus Brenzkatechin, Resorcin, Hydrochinon, aus 4,4'-Dihydroxydiphenylmethan, aus 4,4'-Dihydroxy-3,3'-dimethyldiphenylmethan aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; aus Novolaken (d.h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkyläthers erhalten wurden (vergl. britische Patentschrift 1 017 612), aus Polyphenolen, die durch Kondensation von Phenolen und langkettigen, mindestens 2 Halogenatome enthaltenden Halogenparaffinen erhalten wurden (vergl. britische Patentschrift 1 024 288).

Weiter seien genannt Glycidyläther mehrwertiger Alkohole, beispielsweise aus 1,4-Butandiol, 1,4-Butendiol, Glycerin, Trimethylolpropan, Pentaerythrit und Polyäthylenglykolen. Von weiterem Interesse sind Triglycidylisocyanurat, N,N'-Diepoxypropyloxamid, Polyglycidylthioäther aus mehrwertigen Thiolen, wie beispielsweise aus Bismercaptomethylbenzol, Diglycidyl-trimethylentrisulfon.

Außerdem kommen in Frage: Glycidylester mehrwertiger aromatischer, aliphatischer und cycloaliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäure-diglycidylester, Hexahydrophthalsäurediglycidylester, die ggf. durch Methylgruppen substituiert sein können und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

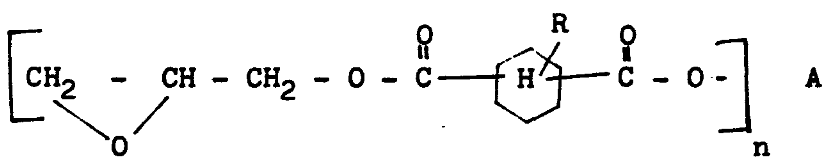

worin A einen mindestens 2-wertigen Rest eines ggf. durch Sauerstoff und/oder cycloaliphatische Ringe unterbrochenen aliphatischen Kohlenwasserstoffs oder den 2-wertigen Rest eines cycloaliphatischen Kohlenwasserstoffs, R Wasserstoff oder Alkylrest mit 1 - 3 C-Atomen und n eine Zahl zwischen 2 - 6 bedeuten, oder Mischungen von Glycidylcarbonsäureestern der angegebenen allgemeinen Formel (vergl. britische Patentschrift 1 220 702.

Vorzugsweise werden für das erfindungsgemäße Verfahren folgende Polyepoxidverbindungen oder deren Mischungen verwendet: Polyglycidyläther mehrwertiger Phenole, insbesondere aus Bisphenol A; Phthalsäurediglycidylester,

Isophthalsäurediglycidylester, Terephthalsäurediglycidylester, Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und/oder Phthalsäureanhydrid und 1 Mol eines Polyols mit n Hydroxylgruppen (n = ganze Zahl von 2-6), insbesondere von 3 Mol Hexahydrophthalsäureanhydrid und/oder Phthalsäureanhydrid und einem Mol 1,1,1-Trimethylolpropan.

Besonders bevorzugt sind Bisphenol A-Polyglycidyläther.

Als Stickstoffverbindungen (a.) wird mindestens eine Verbindung der Formel

$$R_1 - \underset{\substack{| \\ R_2}}{N} - H$$

eingesetzt. In dieser Formel sind $R_1$ und $R_2$ gleich oder verschieden und bedeuten: Wasserstoff; $C_1$ - $C_{18}$ Alkyl, vorzugsweise $C_1$ - $C_6$ Alkyl; Hydroxyalkyl mit 2 - 18, vorzugsweise 2 - 4 C-Atomen in der Alkylgruppe; ß-Alkoxyalkyl mit 2 - 18, vorzugsweise 2 - 4 C-Atomen in der Alkylgruppe und 1 - 4 C-Atomen im Alkoxyrest; ß-Alkoxycarbonylalkyl mit 2 - 18, vorzugsweise 2 - 4 C-Atomen im Alkyl und 1 - 4 C-Atomen im Alkoxyrest; ß-Cyanoalkyl mit 1 - 18, vorzugsweise 2 - 6 C-Atomen im Alkylrest; N-Dialkylaminoalkyl mit 1 - 12, vorzugsweise 2 - 4 C-Atomen im Alkylrest und 1 - 4 C-Atomen in der N-Alkylaminogruppe; ferner $R_1$ und $R_2$ zusammen mit dem Stickstoffatom einen Piperidin oder Pyrrolidinring. Die Alkylgruppen können linear oder verzweigt sein.

Bevorzugt sind Verbindungen in denen $R_1$ und/oder $R_2$ Wasserstoff, Alkyl und ß-Hydroxyalkyl bedeuten.

Namentlich seien folgende Verbindungen genannt: Ammoniak, Methylamin, Dimethylamin, Äthylamin, Diäthylamin, n-Propylamin, Di-n-propylamin, Isopropylamin, Diisopropylamin, n-Butylamin, Di-n-butylamin, Methylpropylamin, Äthylmethylamin, Butylmethylamin, Äthylbutylamin, sek.-Butylamin, Isobutylamin, Diisobutylamin, tert.-Butylamin, Di-tert.-butylamin, n-Amylamin, Methylisoamylamin, Cyclohexylamin, Dicyclohexylamin, Methylcyclohexylamin, Äthylcyclohexylamin, Propylcyclohexylamin, Cyclopentylamin, Dicyclopentylamin, Cyclopentylmethylamin, Pyrrolidin, Piperidin, Äthanolamin, 3-Aminopropanol-1, 1-Aminopropanol-2, N-Methyläthanolamin, N-Phenyläthanolamin, 1-Aminobutanol-3, N-Cyclohexyläthanolamin, N-Dodecyläthanolamin, N-Cyclohexylisopropylamin, Diäthanolamin, Diisopropanolamin, 2-Amino-2-methylpropandiol-3, N,N-Dimethyläthylendiamin, N,N-Diäthyläthylendiamin, N-Trimethyläthylendiamin, N-Triäthyläthylendiamin.

Insbesondere werden verwendet: Ammoniak, Äthanolamin, Diäthanolamin, 1-Aminopropanol-2 (= Isopropanolamin), Diisopropanolamin, Dimethylamin, Diäthylamin, Dibutylamin, Methylamin, Äthylamin, Butylamin(e).

Auf Epoxidäquivalent werden 0.01 bis 0.3, vorzugsweise 0.05 bis 0.2 NH-Äquivalente Ammoniak oder der angegebenen Amine eingesetzt. Unter NH-Äquivalent wird die Menge Ammoniak oder Amin in Gramm verstanden, in der ein Gramm-Atom an Stickstoff gebundener Wasserstoff enthalten ist.

Die Umsetzung der Stickstoffverbindungen mit den Polyepoxiden kann auf verschiedene Weise erfolgen, beispielsweise in Substanz oder in einem inerten Lösungsmittel wie Methanol, Äthanol, Propanol, Isopropanol, Butanol,

Isobutanol, sek.-Butanol, tert.-Butanol, Cyclohexanol, 2-Äthylhexanol-1, Benzol, Xylol, Toluol, Hexan, Heptan, Octan, Isooctan, Cyclopentan, Cyclohexan, Cycloheptan, Cyclopentanon, Cyclohexanon, Essigsäuremethylester, Essigsäureäthylester, Essigsäurepropylester, Essigsäure-n-butylester, Chloroform, Tetrachlorkohlenstoff, Trichloräthan, Dichloräthan, Tetrachloräthan und Chlorbenzol. Die Reaktion kann leicht bei Temperaturen von 20 - 90°C, vorzugsweise 40-90°C durchgeführt werden. In Ausnahmefällen können diese Temperaturen auch nach oben oder unten überschritten werden.

Die Umsetzungsprodukte der Polyepoxide mit Ammoniak und/oder den angegebenen Aminen stellen ß-Hydroxypropylamine dar, sind in organischen Lösungsmitteln löslich und unvernetzt. Sie enthalten in jedem Falle noch freie Epoxidgruppen.

Anschließend an die Umsetzung der Polyepoxide mit den Stickstoffverbindungen erfolgt die Reaktion mit mindestens einer Benzophenonmonocarbonsäure.

Hierunter werden Verbindungen der allgemeinen Formel I verstanden

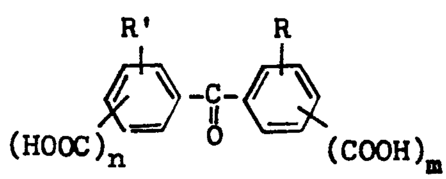

I

worin R und R' gleich oder verschieden sein können und Wasserstoff, Halogen, vorzugsweise Chlor oder Brom oder Di-$C_1$-$C_4$-alkylaminogruppen, $C_1$-$C_6$-Alkyl, Cycloalkyl mit 5 - 6 C-Atomen und m oder n die Zahl 1 mit der Bedingung

n + m = 1 bedeuten. Es können auch Benzophenonmonocarbonsäuren eingesetzt werden, die pro Phenylrest 2 bis 4 Halogenatome enthalten.

Besonders bevorzugt ist p-Benzoylbenzoesäure.

Pro Epoxidäquivalent werden 0,01 - 0,6, vorzugsweise 0,1 - 0,3, Carboxyläquivalente mindestens einer Benzophenoncarbonsäure eingesetzt. Unter 1 Carboxyläquivalent wird die Menge Carbonsäure in Gramm verstanden, in der 1 Gramm-Mol Carboxylgruppe enhalten sind.

Die Reaktionsbedingungen bei der Umsetzung Benzophenoncarbonsäure mit N-modifiziertem Polyepoxid sind die gleichen, wie sie nachstehend für die (Meth)Acrylsäure als Reaktionspartner beschrieben sind.

Anschließend an die Umsetzung der Polyepoxide mit der Benzophenoncarbonsäure erfolgt die Reaktion mit Acryl- und/oder Methacrylsäure. Dabei gelangen auf ein Epoxidäquivalent 0,4 - 0,98, vorzugsweise 0,6 - 0,8, Carboxyläquivalente (Meth) Acrylsäure zum Einsatz.

Die Anlagerung der Acryl- und/oder Methacrylsäure an die mit Ammoniak und/oder den Aminen und Benzophenoncarbonsäuren umgesetzten Polyepoxide erfolgt nach bekannten Methoden, beispielsweise nach den Verfahren der US-PS 3 301 743 oder den deutschen Offenlegungsschriften 2 429 527 und 2 534 012 in Substanz oder in Lösungsmitteln, wie sie bei der Umsetzung der Polyepoxide mit den Stickstoffverbindungen aufgeführt sind. Falls gewünscht, kann die Anlagerung der (Meth)Acrylsäure in Gegenwart von etwa 0,01 - 3 Gew.-%, bezogen auf Ausgangsepoxid an Katalysatoren, wie tert. Amine, Alkalihydroxide, Alkalisalze organischer Carbonsäuren, Mercaptane, Dialkylsulfide, Bis-(hydroxyalkyl)-sulfide, Sul-

fonium-, Phosphoniumverbindungen, Phosphine, Arsine oder Stibine durchgeführt werden. Als zweckmäßig haben sich Umsetzungstemperaturen von 40 bis 90°C erwiesen, die jedoch in speziellen Fällen nach oben oder unten überschritten werden können.
In den Endprodukten sollen mindestens 80 % der im Ausgangspolyepoxid vorhandenen Epoxidgruppen, vorzugsweise 80 - 95 %, mit den angegebenen Stickstoffverbindungen, Benzophenoncarbonsäure und Acrylsäure oder Methacrylsäure umgesetzt sein.

Um die polymerisierbaren erfindungsgemäßen Reaktionsprodukte vor unerwünschter vorzeitiger Polymerisation zu bewahren, empfiehlt es sich, bereits bei der Herstellung 0.001 - 0.1 Gew.-%, bezogen auf die Gesamtmischung, an Polymerisationsinhibitoren oder Antioxydantien zuzusetzen.

Geeignete Hilfsmittel dieser Art sind beispielsweise Phenole und Phenolderivate, vorzugsweise sterisch gehinerte Phenole, die in beiden o-Stellungen zur phenolischen Hydroxygruppe Alkylsubstituenten mit 1 - 6 C-Atomen enthalten, Amine, vorzugsweise sekundäre Acrylamine und ihre Derivate, Chinone.

Namentlich seien genannt: 4,4'-Bis-(2,6-di-tert.-butylphenol), 1.3.5-Trimethyl-2.4.6-tris-(3.5-di-tert.-butyl-4-hydroxy-benzyl)-benzol, 4.4'-Butyliden-bis-(6-tert.-butyl-m-kresol), 3.5-Di-tert.-butyl-4-hydroxybenzylphosphonsäurediäthylester, N.N'-Bis-(ß-naphthyl)-p-phenylendiamin, N,N'-Bis-(1-methylheptyl)-p-phenylendiamin, Phenyl-ß-naphthylamin, 4,4'-Bis-(α,α-dimethylbenzyl)-diphenylamin, 1.3.5-Tris-(3.5-di-tert.-butyl-4-hydroxy-hydrochinnamoyl)-hexahydro-s-triazin, Hydrochinon, p-Benzochinon, 2.5-Di-tert.-butylchinon, Toluhydrochinon, p-tert.-Butylbrenzoatechin, 3-Methylbrenzcatechin, 4-Äthylbrenzcatechin,

Chloranil, Naphthochinon, Phenothiazin, 2.5-Di-tert.-butylhydrochinon.

Weitere geeignete Stabilisatoren sind in "Methoden der organischen Chemie" (Houben-Weyl), 4. Auflage, Band XIV/1, S. 433-452, 756, Georg Thieme Verlag, Stuttgart, 1961, beschrieben. Sehr gut geeignet ist z.B. 2.5-Di-tert.-butylhydrochinon,oder Toluhydrochinon in einer Konzentration von 0.001 bis 0,1 Gew.-%, bezogen auf polymerisierbare Gesamtmischung.

Die erfindungsgemäßen Umsetzungsprodukte können teilweise ohne Zusatz copolymerisierbarer Monomerer oder Lösungsmittel zur Anwendung gelangen. Da es sich jedoch in vielen Fällen um hochviskose Produkte handelt, empfiehlt es sich, sie mit copolymerisierbaren Monomeren abzumischen, um verarbeitungsgerechte Viskositäten zu erhalten und/oder die Eigenschaften der Härtungsprodukte zu variieren.

Geeignete Monomere sind:

1) Ester der Acryl- oder Methacrylsäure mit aliphatischen $C_1$ - $C_8$, cycloaliphatischen $C_5$ - $C_6$, araliphatischen $C_7$ - $C_8$ Monoalkoholen, beispielsweise Methylacrylat, Äthylacrylat, n-Butylacrylat, Methylhexylacrylat, 2-Äthylhexylacrylat und die entsprechenden Methacrylsäureester; Ccyclopentylacrylat, Cyclohexylacrylat oder die entsprechenden Methacrylsäureester; Benzylacrylat, ß-Phenyläthylacrylat und entsprechende Methacrylsäureester;

2) Hydroxyalkylester der Acryl- oder Methacrylsäure mit 2-4 C-Atomen in der Alkoholkomponente, wie Hydroxyäthylacrylat, 2-Hydroxypropylacrylat, 3-Hydroxypropylacrylat, 2-Hydroxybutylacrylat, 3-Hydroxybutylacrylat oder entsprechende Methacrylsäureester;

3) Di- und Polyacrylate sowie Di- und Polymethacrylate von Glykolen mit 2 bis 6 C-Atomen und Polyolen mit 3 - 4 Hydroxylgruppen und 3 bis 6 C-Atomen, wie Äthylenglykoldiacrylat, Propandiol-1,3-diacrylat, Butandiol-1,4-diacrylat, Hexandiol-1,6-diacrylat, Trimethylolpropantriacrylat, Pentaerythrittri- und -tetraacrylat sowie entsprechende Methacrylate, ferner Di-(meth)-acrylate von Polyätherglykolen des Glykols, Propandiol-1,3, Butandiol-1,4; Trimethylolpropan, Pentaerythrit.

4) N-Methylolacrylamid oder N-Methylolmethacrylamid sowie entsprechende N-Methylolalkyläther mit 1-4 C-Atomen in der Alkyläthergruppe bzw. entsprechende N-Methylolallyläther, insbesondere N-Methoxymethyl(meth)acrylamid, N-Butoxymethyl(meth)acrylamid und N-Allyloxymethyl(meth) acrylamid;

Es können auch Gemische aus einem oder mehreren der vorgenannten Monomeren eingesetzt werden. Die Zusätze betragen etwa 5 - 80 Gew.-%, vorzugsweise 40-60 Gew.-%, bezogen auf Mischung aus erfindungsgemäßen Reaktionsprodukten und zusätzlichen Monomeren.

Bevorzugt sind Di-und Polyacrylate der Gruppe 3).

Dabei ist darauf zu achten, daß die in dem Harz eingebaute Menge Benzophenoncarbonsäure so gewählt ist, daß nach einer evtl. Abmischung mit Monomeren in dem Überzugsmittel genügend Reaktivität vorhanden ist, d.h.

mindestens 0,02 Mol Benzophenoncarbonsäure pro 100 g Bindemittel.

Die erfindungsgemäßen Bindemittel können auch mit anderen üblichen UV-härtenden Acrylatharzen abgemischt werden, ohne daß ein zusätzliches Phctoinitiatorsystem erforderlich wäre.

Obwohl es bevorzugt ist, die erfindungsgemäßen Bindemittel in lösungsmittelfreien, UV-härtenden Überzugsmitteln einzusetzen, ist es möglich, eine geeignete Viskosität durch Abmischen mit inerten Lösungsmitteln wie Butylacetat, Äthylacetat, Aceton, Äthylmethylketon, Diäthylketon, Cyclohexan, Cyclohexanon, Cyclopentan, Cyclopentanon, n-Heptan, n-Hexan, n-Octaon, Isooctan, Methylenchlorid, Chloroform, 1,1-Dichloräthan, 1,2-Dichloräthan, 1,1,2-Trichloräthan, Tetrachlorkohlenstoff einzustellen. Um eine solche verarbeitungsgerechte Viskosität zu erhalten, können 5 bis 50 Gew.-%, vorzugsweise 20 - 40 Gew.-% an Lösungsmitteln, bezogen auf Mischung aus erfindungsgemäßen Reaktionsprodukt und Lösungsmittel, zugesetzt werden.

Natürlich ist es auch möglich, Mischungen aus zusätzlichen Monomeren und Lösungsmitteln innerhalb der angegebenen Mengenverhältnisse einzusetzen.

Vorteilhafte Zusätze, die zu einer weiteren Steigerung der Reaktivität führen können, sind bestimmte tert. Amine wie z.B. Triäthylamin und Triäthanolamin. Ähnlich wirksam ist der Zusatz von Mercaptoverbindungen wie Dodecylmercaptan, Thioglykolsäureester, Thiophenol oder Mercaptoäthanol. Die genannten Stoffe werden vorzugsweise in Mengen von 0 bis 5 Gew.-%, bezogen auf die polymerisierbaren Komponenten, eingesetzt.

Als Strahlenquellen zur Durchführung der Photopolymerisation können künstliche Strahler, deren Emission im Bereich von 2500 - 5000 Å, vorzugsweise 3000 - 4000 Å liegt, verwendet werden. Vorteilhaft sind Quecksilberdampf-, Xenon- und Wolfram-Lampen, insbesondere Quecksilberhochdurckstrahler.

In der Regel lassen sich Schichten der erfindungsgemäßen Reaktionsprodukte mit einer Dicke zwischen 1 /um und 0,1 mm (1 /um = $10^{-3}$mm) in weniger als einer Sekunde zu einem Film aushärten, wenn sie mit dem Licht einer ca. 8 cm entfernten Quecksilberhochdrucklampe, beispielsweise vom Typ HTQ-7 der Firma Philips, bestrahlt werden.

Werden Füllstoffe bei der Verwendung der erfindungsgemäßen Harzmassen als UV-Licht-härtende Überzüge mitverwendet, so ist deren Einsatz auf solche beschränkt, die durch ihr Absorptionsverhalten den Polymerisationsvorgang nicht unterdrücken. Beispielsweise können Talkum, Schwerspat, Kreide, Gips, Kieselsäuren, Asbestmehle und Leichtspat als lichtdurchlässige Füllstoffe verwendet werden, in sehr dünnen Schichten können auch $TiO_2$ oder andere Farbpigmente mitverwendet werden.
Das Auftragen der Überzugsmittel auf geeignete Substrate kann mittels in der Lackindustrie üblichen Methoden, wie Sprühen, Walzen, Rakeln, Drucken, Tauchen, Fluten, Streichen, Pinseln, erfolgen.

Geeignete Substrate sind Papier, Karton, Leder, Holz, Kunststoffe, Textilien, keramische Materialien, Metalle, vorzugsweise Papier und Karton. Da die Überzugsmittel unter UV-Licht in Sekundenbruchteilen bis zu wenigen Sekunden zu Filen mit ausgezeichneten mechanischen Eigenschaften aushärten, ist es beispielsweise möglich, einen Papierbeschichtungsvorgang den in der Druckbranche üblichen Verarbeitungsgeschwindigkeiten anzupassen.

Die in den Beispielen angegebenen Prozente und Teile beziehen sich auf das Gewicht, sofern nicht anders vermerkt.

Herstellung der zu vergleichenden Bindemittel bzw. eines erfindungsgemäßen Bindemittels

Vergleich 1 (eingebauter Photoinitiator)

340 g Bisphenol A-bisglycidyläther (Epoxyäquivalentgewicht 190) werden mit 1 g Thiodiglykol, 72 g Acrylsäure sowie 88 g p-Benzoylbenzoesäure versetzt und unter Überleiten von Luft bei 70°C so lange gerührt, bis die Säurezahl von 0 erreicht ist. Es wird dann mit 440 g eines Triacrylates abgemischt.

Vergleich 2

340 g Bisphenol A-bisglycidyläther (Epoxyäquivalentgewicht 190) werden mit 1 g Thiodiglykol und 100 g Acrylsäure versetzt und bis zur Säurezahl 0 bei 70°C unter Überleiten von Luft gerührt. Es wird mit 440 g eines Triacrylates abgemischt.

Beispiel 1

340 g Bisphenol A-bisglycidyläther (Epoxyäquivalentgewicht 190) werden mit 13 g Diäthanolamin sowie 8 g Äthanolamin bei 30°C innerhalb 3 Stunden umgesetzt. Anschließend wird bei 60°C mit 59 g Benzophenoncarbonsäure und daran anschließend 65 g Acrylsäure versetzt und bis zur Säurezahl 0 gerührt (insges. ca.8 Std.)Es wird mit 440 g eines Triacrylates abgemischt.

Das in den Vergleichen 1 und 2 sowie in Beispiel 1 verwendete Triacrylat ist das Triacrylat eines Umsetzungsproduktes aus 1 Mol Trimethylolpropan und 4 Mol Äthylenoxid.

Vergleich 3 (Herstellung eines Photoinitiators für Vergleich 2)

113 g p-Benzoylbenzoesäure (0.5 Mol) werden mit 238 g Thionylchlorid (2 Mol) umgesetzt. Nach Beendigung der Reaktion wird das überschüssige Thionylchlorid im Wasserstrahlvakuum abdestilliert und der Rückstand vorsichtig mit 116 g (1 Mol) Hydroxyäthylacrylat versetzt. Es wird bei 80°C weiter gerührt und langsam mit 2 n Natronlauge tropfenweise bis zur leicht alkalischen Reaktion versetzt. Es wird anschließend mit Wasser verdünnt, die organische Phase abgetrennt, mit Wasser gewaschen und getrocknet. Es resultierte ein viskoses gelbliches Öl.

Anwendung:

Die nach Beispiel 1 und Vergleich 1, 2 und 3 hergestellten Harze werden mit den in Tabelle 1 aufgeführten Initiatoren und Beschleunigern versetzt und ihre Reaktivität überprüft.

Die Aushärtung erfolgt mit einem Hanovia-Strahler (80 Watt/cm Strahlerleistung) im Abstand von 10 cm als 20 µm Film auf Papier auf einem mit regelbarer Geschwindigkeit ausgestatteten Transportband. Die Bandgeschwindigkeit in m/min bis zur vollständigen Aushärtung (klebfrei und lösungsmittelfest) ist dabei ein Maß für die unterschiedliche Reaktivität.

Tabelle 1: Verwendete Zusammensetzungen und Überprüfung deren Reaktivität

| Zusammensetzung | Reaktivität (m/min) |
|---|---|
| Erfindungsgemäßes Harz nach Beispiel 1 | 40 |
| 95 Tle erfindungsgemäßes Harz nach Beispiel 1<br>5 Tle Triäthanolamin | 55 |
| 95 Tle Harz nach Vergleich 2<br>5 Tle Benzophenon | > 2 Stunden |
| 90 Tle Harz nach Vergleich 2<br>5 Tle Benzophenon<br>5 Tle Triäthanolamin | 35 |
| Harz nach Vergleich 1 | |
| 95 Tle Harz nach Vergleich 1<br>5 Tle Triäthanolamin | 40 |
| 90 Tle Harz nach Vergleich 2<br>10 Tle Initiator nach Vergleich 3 | 20 |
| 85 Tle Harz nach Vergleich 2<br>10 Tle Initiator nach Vergleich 3<br>5 Tle Triäthanolamin | 35 |

Aus der Gegenüberstellung ist der Vorteil der erfindungsgemäßen Harze gut ersichtlich.

Von den Harzen des Beispiels 1 und Vergleich 2 unter Zusatz von Benzophenon wurde jeweils 100 $\mu$m starke Filme auf eine Glasplatte gezogen und unter den o.g. Bedingungen ausgehärtet. Die Filme wurden sodann von der Glasplatte abgelöst und mit Methylenchlorid extrahiert. Der Extrakt wurde eingeengt und auf die Anwesenheit von Initiatoren chromatographisch untersucht.

Ergebnis:

Während im erfindungsgemäßen Harz (ohne Zusatz von Triäthanolamin) dünnschicht-chromatographisch keine nachweisbaren Bestandteile aufzeigte, konnte aus dem mit Benzophenon polymerisierten Film Benzophenon extrahiert und nachgewiesen werden.

Beispiel 2

Es wird wie in Beispiel 1 verfahren, jedoch mit der Änderung, daß statt 54 g p-Benzoylbenzoesäure 110 g eingesetzt werden.

Beispiel 3

Es wird ein Urethanacrylat bei 40°C innerhalb von 6 Stunden hergestellt durch Umsetzung von 417 g Toluylendiisocyanat mit 220 g Hydroxyäthylacrylat 36 g Thiodiglykol sowie 670 g eines äthoxylierten Trimethylolpropans (OH-Zahl 250).
Es resultiert ein Harz mit einer Viskosität von 1200 Pas/20°C.

Anwendung:

40 Tle des erhaltenen Urethanacrylatharzes werden mit 10 Tln Hexan-1,6-dioldiacrylat und 50 Tln des Harzes nach Beispiel 2 (= gemäß Erfindung) vermischt und als 100 µm Film auf einer Glasplatte unter den o.g. Bedingungen (35 m/min) ausgehärtet. Auch hier waren nach der Extraktion des fertigen Films keinerlei Initiatoren nachzuweisen.

**Patentansprüche:**

1.) Photopolymerisierbare Bindemittel auf Basis von Umsetzungsprodukten aus Stickstoff-modifizierten 1,2-Polyepoxiden mit mehr als einer 1,2-Epoxidgruppe pro Molekül und α,ß-monoolefinisch ungesättigten Carbonsäuren, wobei mindestens 80 % der 1.2-Epoxidgruppen des 1.2-Polyepoxids umgesetzt worden sind, dadurch gekennzeichnet, daß das 1,2-Polyepoxid

a) mit 0.01 bis 0.3 NH-Äquivalenten, bezogen auf 1 Epoxidäquivalent, Ammoniak oder eines aliphatischen oder cycloaliphatischen primären oder sekundären Amins oder eines Gemisches der vorgenannten Stickstoffverbindungen und anschließend

b) mit 0.01 bis 0.6 Carboxyläquivalenten, bezogen auf ein Epoxidäquivalent mindestens einer ortho-, meta- oder para-Benzoylbenzoesäure der Formel

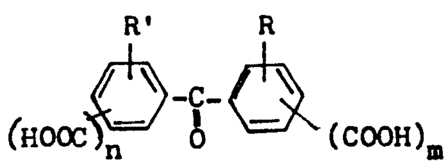

worin R und R' gleich oder verschieden sein können und Wasserstoff, Halogen oder Di-$C_1$-$C_4$-alkylaminogruppen, $C_1$-$C_6$-Alkyl, Cycloalkyl mit 5 - 6 C-Atomen und m oder n die Zahl 1 mit der Bedingung $n + m = 1$ bedeuten und daran anschließend

c) mit 0.98 bis 0.4 Carboxyläquivalenten, bezogen auf 1 Epoxidäquivalent, Acryl- oder Methacrylsäure oder eines Gemisches aus Acryl- und Methacrylsäure umgesetzt worden ist.

2.) Photopolymerisierbares Bindmittel gemäß Anspruch 1, dadurch gekennzeichnet, daß die Stickstoffverbindung a) Ammoniak, Äthanolamin, Diäthanolamin, 1-Aminopropanol-2 (= Isopropanolamin), Diisopropanolamin, Dimethylamin, Diäthylamin, Dibutylamin, Methylamin, Äthylamin, Butylamin (e) oder ein Gemisch der vorgenannten Verbindung ist.

3.) Photopolymerisierbare Bindemittel gemäß Anspruch 1, dadurch gekennzeichnet, daß Komponente b) p-Benzoylbenzoesäure ist.

4.) Verwendung der photopolymerisierbaren Bindemittel gemäß Anspruch 1 in UV-härtenden Überzugsmassen ggf. in Abmischung mit anderen photocopolymerisierbaren (Meth) Acrylgruppen enthaltenden Bindemitteln.